# EUROPEAN PATENT APPLICATION

(11) **EP 4 475 270 A1**
(43) Date of publication of application: **11.12.2024**
(21) Application number: 22960153.9
(22) Date of filing: 29.09.2022
(51) Int. Cl.: H01M 10/48, H01M 50/10, H01M 50/147

(54) **BATTERY CELL, BATTERY, AND ELECTRICAL DEVICE**

(71) Applicant: Contemporary Amperex Technology (Hong Kong) Limited, Central, Central And Western District (HK)
(72) Inventor: CHEN, Long, Ningde, Fujian 352100 (CN); LIN, Denghua, Ningde, Fujian 352100 (CN); CHEN, Xinxiang, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2022/122897
(87) International publication number: WO 2024/065517

(57) **Abstract**

The present application discloses a battery cell, a battery, and an electricity consuming apparatus. The battery cell includes a shell and a first detection assembly. The first detection assembly is disposed on the shell, and the first detection assembly is configured to detect status information of the battery cell. In the technical solution of embodiments of the present application, the first detection assembly is disposed in the battery cell, which can obtain the operating status information of the battery cell, monitor the battery cell, and find abnormal conditions of the battery cell during operation in a timely manner, thereby improving the operational stability of the battery cell and the safety of the battery.

## Description

### TECHNICAL FIELD

The present application relates to the field of batteries, and in particular, to a battery cell, a battery, and an electricity consuming apparatus.

### BACKGROUND

Batteries are widely used in electronic devices, such as mobile phones, laptops, electric scooters, electric cars, electric airplanes, electric ships, electric toy cars, electric toy ships, electric toy planes, and electric tools. The batteries may include cadmium nickel batteries, hydrogen nickel batteries, lithium-ion batteries, secondary alkaline zinc manganese batteries, and the like.

In the development of battery technologies, the research has always focused on the improvement on the performance of batteries. At present, how to improve the safety performance and operational stability of batteries is also one of the research focuses in the art.

### SUMMARY

In view of the above problems, the present application provides a battery cell, a battery, and an electricity consuming apparatus to improve the safety performance and operational stability of the battery.

In a first aspect, the present application provides a battery cell, including a shell and a first detection assembly, where the first detection assembly is located on the shell, and the first detection assembly is configured to detect status information of the battery cell.

In the technical solution of embodiments of the present application, the first detection assembly is disposed in the battery cell, which can obtain the operating status information of the battery cell, monitor the battery cell, and find abnormal conditions of the battery cell during operation in a timely manner, thereby improving the operational stability of the battery cell and the safety of the battery.

In some embodiments, the status information includes at least one of voltage information, temperature information, deformation information, and pressure information. By monitoring the status information, the internal operating status of the battery cell can be accurately reflected to ensure the accuracy of detection data.

In some embodiments, the first detection assembly is connected to the shell by any one of bonding, clamping, or welding. The above connection method can ensure a firm connection between the first detection assembly and the shell and ensure the safety and reliability of the status monitoring process.

In some embodiments, the battery cell further includes a first connecting assembly, and the first detection assembly is connected to the shell through the first connecting assembly.

In some embodiments, the first connecting assembly is configured to detachably connect the first detection assembly to the shell. The above structure can improve the replacement efficiency of the first detection assembly.

In some embodiments, the first connecting assembly includes: a first connecting seat and a first connecting block. The first connecting seat has a first recess, and the first connecting seat is connected to one of the shell or the first detection assembly. The first connecting block has a first protrusion detachably connected to the first recess, and the first connecting block is connected to the other of the shell or the first detection assembly. Due to the detachable connection between the first recess and the first protrusion, the structure is simple and easy to assemble. Therefore, the structure can effectively improve the assembly efficiency and replacement efficiency of the first detection assembly.

In some embodiments, the first detection assembly includes a chip. The battery cell further includes a second detection assembly disposed at a position for detecting of the battery cell. The second detection assembly and the first detection assembly are configured to enable wireless communication. The above structure can simplify wiring harnesses of the first detection assembly and the second detection assembly, improve the integration of a device, reduce the space occupied by the second detection assembly, and ensure the energy density of the battery cell.

In some embodiments, the battery cell comprises an electrode assembly and a second connecting assembly. The electrode assembly is disposed in the shell, the chip is disposed on a side, away from the electrode assembly, of the shell, and the second connecting assembly is configured to electrically connect the electrode assembly to the chip.

In some embodiments, the shell further includes a first electrode terminal, the electrode assembly has a positive electrode tab and a negative electrode tab, the shell is electrically connected to one of the positive electrode tab or the negative electrode tab, the first electrode terminal is electrically connected to the other of the positive electrode tab or the negative electrode tab, the chip is disposed on the shell and electrically connected to the shell, and the second connecting assembly is connected to the first electrode terminal. The shell is used as a leading-out end for the positive electrode tab or the negative electrode tab, and the first electrode terminal is used as the other leading-out end, thereby simplifying the structure of the battery cell. Meanwhile, the second connecting assembly and the chip are connected to the two leading-out ends respectively, which can achieve data transmission between the first connecting assembly and the chip. The above structure is simple, and improves the integration of the device, while ensuring the efficiency of detection data transmission.

In some embodiments, the electrode assembly has a positive electrode tab and a negative electrode tab, the second connecting assembly includes a first connecting wire and a second connecting wire, the first connecting wire is electrically connected to the positive electrode tab, and the second connecting wire is electrically connected to the negative electrode tab. The first connecting wire and the second connecting wire are directly connected to the positive electrode tab and the negative electrode tab, which can improve the efficiency of obtaining status information by the second detection assembly and ensure the accuracy of detection data.

In some embodiments, the shell includes a first electrode terminal electrically connected to the positive electrode tab, the first connecting wire is connected to the first electrode terminal, and/or the shell includes a second electrode terminal electrically connected to the negative electrode tab, and the second connecting wire is connected to the second electrode terminal. The first connecting wire is connected to the first electrode terminal, which facilitates the connection operation of the first connecting wire and improves the convenience of assembling the second detection assembly.

In some embodiments, an avoidance structure is disposed on an end surface, away from the electrode assembly, of the first electrode terminal and/or the second electrode terminal, and the avoidance structure is configured to accommodate an end portion of the second connecting assembly. By setting the avoidance structure, the protruding height of the second connecting assembly on the surface of the electrode terminal is reduced, and the interference between the end portion of the second connecting assembly and another component connected to the end portion of the electrode terminal is reduced.

In some embodiments, the shell is provided with a connecting hole, and the end portion of the second connecting assembly passes through the connecting hole and is connected to the electrode assembly. The connecting hole facilitates the end portion of the second connecting assembly to pass through the shell and be connected to the electrode assembly in the shell.

In some embodiments, the battery cell further includes a connecting sheet, and one end of the second connecting assembly is connected to the connecting sheet.

In some embodiments, the second detection assembly includes a deformation sensor, the shell includes a pressure relief mechanism, and the deformation sensor is disposed near or on the pressure relief mechanism. The deformation sensor is disposed on or near the pressure relief mechanism to accurately obtain deformation data of the pressure relief mechanism, and the position can ensure the accuracy and sensitivity of the deformation data, improve detection efficiency, reflect an abnormal status of the battery cell in a timely manner, and further ensure the safety of the battery cell.

In some embodiments, the second detection assembly includes a temperature sensor, and the temperature sensor is disposed on a side, facing the electrode assembly, of the shell, or the temperature sensor is disposed on the electrode assembly. The temperature sensor is used for obtaining temperature information of the electrode assembly, which can reflect the operating status of internal substances in the battery cell in a timely manner. When the temperature of the battery cell is too high, feedback can be provided in a timely manner, and thus the probability of failure or explosion of the battery cell 7 is reduced.

In some embodiments, the shell includes an end cover, and the first electrode terminal and/or the second electrode terminal are disposed on the end cover. The first electrode terminal or the second electrode terminal is disposed on the end cover to facilitate the connection of the first electrode terminal and the second electrode terminal with external components.

In a second aspect, the present application further provides a battery, including the battery cell in the foregoing embodiments.

In some embodiments, the battery further includes a sampling assembly, and the sampling assembly is connected to the first detection assemblies of at least some battery cells to obtain status information of the battery cells. By setting the sampling assembly, statistics on data from a plurality of battery cells can be made to reflect the operating status of the entire battery and facilitate a user to monitor the overall status of the battery.

In a third aspect, the present application further provides an electricity consuming apparatus, including the battery in the foregoing embodiments for providing electrical energy.

The above description is only a summary of the technical solutions of the present application. In order to understand the technical means in the present application more clearly, it can be implemented in accordance with the content of the specification; and in order to make the above and other objectives, features and advantages of the present application more obvious and easier to understand, and the specific embodiments of the present application are cited below.

### DESCRIPTION OF THE DRAWINGS

Features, advantages, and technical effects of exemplary embodiments of the present application will be described below with reference to the accompanying drawings.
Fig. 1 is a schematic structural diagram of a vehicle provided by some embodiments of the present application;
Fig. 2 is an exploded schematic diagram of a battery provided by some embodiments of the present application;
Fig. 3 is an exploded schematic diagram of a battery cell in a battery provided by some embodiments of the present application;
Fig. 4 is a schematic structural diagram of a first connecting assembly provided by some embodiments of the present application;
Fig. 5 is an enlarged schematic diagram of a circular frame B in Fig. 4;
Fig. 6 is a schematic structural diagram of a first connecting assembly provided by other embodiments of the present application;
Fig. 7 is a schematic structural diagram of a battery cell provided by other embodiments of the present application;
Fig. 8 is a schematic structural diagram of a battery cell provided by still other embodiments of the present application;
Fig. 9 is a schematic structural diagram of a battery cell provided by some further embodiments of the present application;
Fig. 10 is a schematic structural diagram of an end cover of a battery cell provided by some embodiments of the present application;
Fig. 11 is a schematic structural diagram of a C-C section in Fig. 10; and
Fig. 12 is an enlarged schematic diagram of a circular frame D in Fig. 11.

The accompanying drawings are not drawn to actual scale.

Reference numerals are described as follows:
1. Vehicle; 2. Battery; 20. Shell body; 21. Opening; 24. Pressure relief mechanism; 25. Electrode terminal; 3. Controller; 4. Motor; 5. Box; 51. First portion; 52. Second portion; 53. Accommodating space; 7. Battery cell; 70. Shell; 11. Electrode assembly; 701. First connecting assembly; 801. First detection assembly; 802. Second connecting assembly; 706. First connecting seat; 707. First connecting block; 708. Second connecting seat; 709. Second connecting block; 704. First electrode terminal; 806. First connecting wire; 807. Second connecting wire; 704. First electrode terminal; 705. Second electrode terminal; 712. Connecting sheet; 101. Positive electrode tab; 102. Negative electrode tab; 714. Avoidance structure; 808. Liquid injection hole; 809. Connecting hole.

### DETAILED DESCRIPTION

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a shell used for packaging one or more battery cells. The shell may prevent liquid or other foreign matters from affecting charging or discharging of the battery cells.

The battery cell includes an electrode assembly and an electrolyte, and the electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active material layer applied on a surface of the positive electrode current collector; and the positive electrode current collector includes a positive electrode current collecting portion and a positive electrode protrusion protruding from the positive electrode current collecting portion, the positive electrode current collecting portion is coated with the positive electrode active material layer, at least a portion of the positive electrode protrusion is not coated with the positive electrode active material layer, and the positive electrode protrusion serves as a positive electrode tab. Taking a lithium-ion battery as an example, a material for the positive electrode current collector may be aluminum, the positive electrode active material layer includes a positive electrode active material, and the positive electrode active material may be lithium cobalt oxide, lithium iron phosphate, ternary lithium, lithium manganate, or the like. The negative electrode plate includes a negative electrode current collector and a negative electrode active material layer applied on a surface of the negative electrode current collector; and the negative electrode current collector includes a negative electrode current collecting portion and a negative electrode protrusion protruding from the negative electrode current collecting portion, the negative electrode current collecting portion is coated with the negative electrode active material layer, at least a portion of the negative electrode protrusion is not coated with the negative electrode active material layer, and the negative electrode protrusion serves as a negative electrode tab. A material for the negative electrode current collector may be copper, the negative electrode active material layer includes a negative electrode active material, and the negative electrode active material may be carbon, silicon, or the like. In order to ensure that no fusing occurs when high current passes through, there is a plurality of positive electrode tabs stacked together, and there is a plurality of negative electrode tabs stacked together. A material for the separator may be polypropylene (PP), polyethylene (PE), or the like. Moreover, the electrode assembly may be of a wound structure or a stacked structure, and the embodiments of the present application are not limited thereto.

For convenient description, the following embodiments are described by an example of a vehicle as an electricity consuming apparatus.

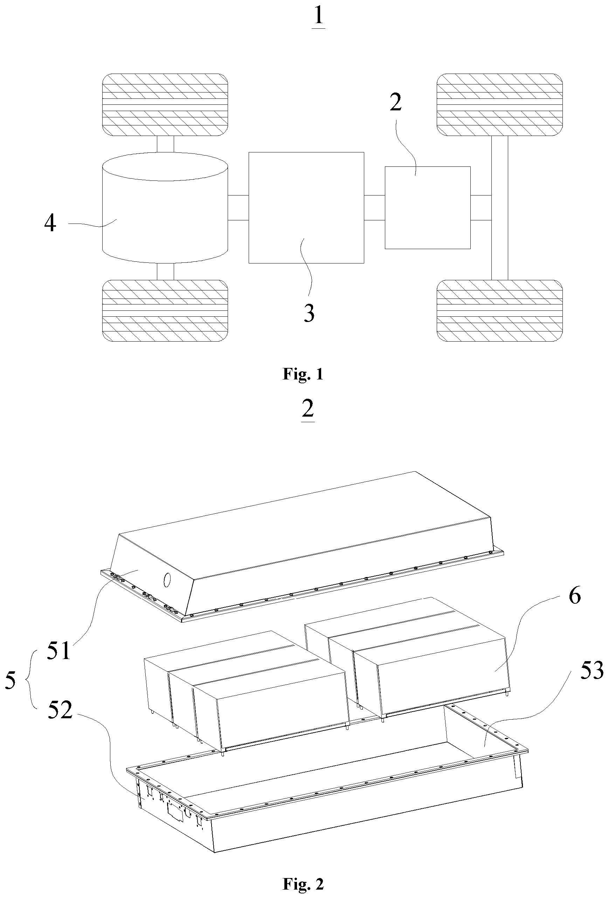

Fig. 1 is a schematic structural diagram of a vehicle provided by some embodiments of the present application. As shown in Fig. 1, a battery 2 is disposed inside the vehicle 1, and the battery 2 may be disposed in the bottom, head, or tail of the vehicle 1. The battery 2 may be used for supplying power to the vehicle 1. For example, the battery 2 may be used as an operation power supply of the vehicle 1.

The vehicle 1 may further include a controller 3 and a motor 4. The controller 3 is used for controlling the battery 2 to supply power to the motor 4, for example, for an operating power demand of the vehicle 1 during startup, navigation and running.

In some embodiments of the present application, the battery 2 may be used not only as an operation power supply of the vehicle 1, but also as a driving power supply of the vehicle 1 to replace or partially replace fuel or natural gas to provide driving power for the vehicle 1.

Fig. 2 is an exploded schematic diagram of a battery provided by some embodiments of the present application. As shown in Fig. 2, the battery 2 includes a box 5 and a battery module, a plurality of battery cells 7 form the battery module, and the battery module is accommodated in the box 5.

The box 5 is used for accommodating the battery cells, and the box 5 may have multiple structures. In some embodiments, the box 5 may include a first portion 51 and a second portion 52, the first portion 51 and the second portion 52 cover each other, and the first portion 51 and the second portion 52 jointly define an accommodating space 53 for accommodating the battery cells. The second portion 52 may be of a hollow structure with an opening at one end, the first portion 51 is of a plate-like structure, and the first portion 51 is fitted on the open side of the second portion 52 to form the box 5 with the accommodating space 53; or each of the first portion 51 and the second portion 52 may be of a hollow structure with an open side, and the open side of the first portion 51 is fitted on the open side of the second portion 52 to form the box 5 with the accommodating space 53. The first portion 51 and the second portion 52 may be in various shapes, such as cylindrical or cuboid.

To improve the sealing property after the first portion 51 is connected to the second portion 52, a sealing member, such as a sealant or a sealing ring, may be disposed between the first portion 51 and the second portion 52.

Assuming that the first portion 51 is closed to a top of the second portion 52, the first portion 51 may be referred to as an upper box cover, and the second portion 52 may be referred to as a lower box body.

There may be one or more battery cells in the battery 2. If there is a plurality of battery cells, the plurality of battery cells may be connected in series, in parallel, or in hybrid. The hybrid connection refers to a combination of series connection and parallel connection among the plurality of battery cells. The plurality of battery cells 7 may be directly connected in series, in parallel, or in hybrid together, and then the whole formed by the plurality of battery cells 7 is accommodated in the box 5. Alternatively, the plurality of battery cells 7 may be first connected in series, in parallel, or in hybrid to form a battery module, then a plurality of battery modules are connected in series, in parallel, or in hybrid to form a whole, and the whole is accommodated in the box 5.

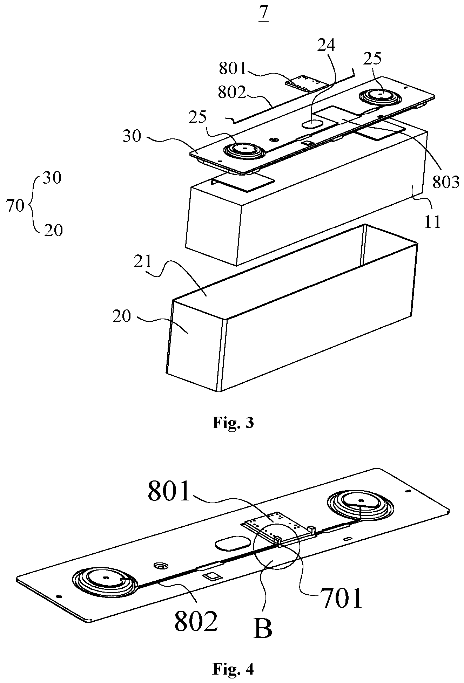

Fig. 3 is an exploded schematic diagram of a battery cell in a battery provided by some embodiments of the present application. The battery cell 7 in the embodiments of the present application includes an electrode assembly 11, a shell body 20, and an end cover assembly 30. The shell body 20 has an opening 21, the electrode assembly 11 is accommodated in the shell body 20, and the end cover assembly 30 is used for being connected to the shell body 20 and closed to the opening 21.

At least one electrode assembly 11 is included in a shell 70. For example, the electrode assembly 11 includes a positive electrode plate, a negative electrode plate, and a separator. The electrode assembly 11 may be a wound electrode assembly, a stacked electrode assembly, or other form of electrode assembly.

In some embodiments, the electrode assembly 11 is a wound electrode assembly. The positive electrode plate, the negative electrode plate, and the separator are all strip-shaped structures. In the embodiments of the present application, the positive electrode plate, the separator, and the negative electrode plate may be stacked in sequence and wound for more than two turns to form the electrode assembly 11.

In other embodiments, the electrode assembly 11 is a stacked electrode assembly. Specifically, the electrode assembly 11 includes a plurality of positive electrode plates and a plurality of negative electrode plates, and the positive electrode plates and the negative electrode plates are alternately stacked in a direction parallel to a thickness direction of the positive electrode plates and a thickness direction of the negative electrode plates.

The battery cell 7 includes at least one electrode assembly 11. That is, in the battery cell 7, one or more electrode assemblies 11 may be accommodated in the shell body 20.

The battery cell 7 generally includes a shell 70. The shell 70 includes a shell body 20 and an end cover assembly 30. The shell body 20 is of a hollow structure with an opening on one side. The end cover assembly 30 is fitted on the opening of the shell body 20 and forms a sealed connection to form an accommodating cavity for accommodating the electrode assembly 11 and an electrolyte.

The shell body 20 may be in various shapes, such as cylindrical or cuboid. The shape of the shell body 20 may be determined according to a specific shape of the electrode assembly 11. For example, if the electrode assembly 11 is of a cylindrical structure, a cylindrical shell body may be used; or if the electrode assembly 11 is of a cuboid structure, a cuboid shell body may be used. The end cover assembly 30 may also be of various structures, such as a plate-like structure or a hollow structure with an opening at one end. For example, the shell body 20 is of a cuboid structure, the end cover assembly 30 is of a plate-like structure, and the end cover assembly 30 is closed to the opening at the top of the shell body 20.

The end cover assembly 30 further includes an electrode terminal 25. In some embodiments, two electrode terminals 25 are disposed, and the two electrode terminals 25 are defined as a first electrode terminal and a second electrode terminal respectively. The first electrode terminal and the second electrode terminal may be a positive electrode terminal and a negative electrode terminal respectively, or a negative electrode terminal and a positive electrode terminal respectively, which are not limited here. The positive electrode terminal and the negative electrode terminal are respectively used for being electrically connected to a positive electrode tab and a negative electrode tab of the electrode assembly 11, so as to output current generated by the electrode assembly 11.

The end cover assembly 30 further includes a pressure relief mechanism 24, and the pressure relief mechanism 24 is used for releasing internal substances of the battery cell 7 when the internal pressure or temperature of the battery cell 7 reaches a predetermined value, so as to reduce the pressure or temperature of the battery cell 7. For example, the pressure relief mechanism 24 is located between the positive electrode terminal and the negative electrode terminal, and the pressure relief mechanism 24 may be a component such as an explosion-proof valve, a rupture disc, a gas valve, a pressure relief valve, or a safety valve.

In some embodiments, the shell body 20 may alternatively be of a hollow structure with openings on two opposite sides. The end cover assembly 30 includes two end cover assemblies 30, and the two end cover assemblies 30 are respectively fitted on the two openings of the shell body 20 and form sealed connections to form an accommodating cavity for accommodating the electrode assembly 11 and an electrolyte. In some examples, the positive electrode terminal and the negative electrode terminal may be mounted on the same end cover assembly 30. In other examples, the positive electrode terminal and the negative electrode terminal are mounted on two end cover assemblies 30 respectively.

A detection module is usually disposed in the battery 2 to detect an operating status of the battery 2. Each battery 2 is provided with a chip, the battery cell 7 is provided with a sensing device, and the chip is connected to the sensing devices of a plurality of battery cells 7 to obtain status information from each battery cell 7, such as voltage and temperature information of the battery cell 7. Then the chip summarizes the information data to obtain operating status information of the entire battery 2. However, during use, the inventors found that the operating statuses of the plurality of battery cells 7 in the battery 2 are greatly different, and if only the status information of the entire battery 2 can be obtained, the conditions of the battery cells 7 cannot be monitored in a timely manner to make corresponding adjustments.

In view of the above problems, the inventors designed a battery cell 7, a first detection assembly 801 is disposed in the battery cell 7, the first detection assembly 801 is disposed on a shell 70, and the first detection assembly 801 is configured to detect status information of the battery cell 7.

According to the technical solution of the embodiments of the present application, the first detection assembly 801 is disposed in the battery cell 7, which can obtain the operating status information of the battery cell 7, monitor the battery cell 7, and find abnormal conditions of the battery cell 7 during operation in a timely manner, thereby improving the operational stability of the battery cell 7 and the safety of the battery 2.

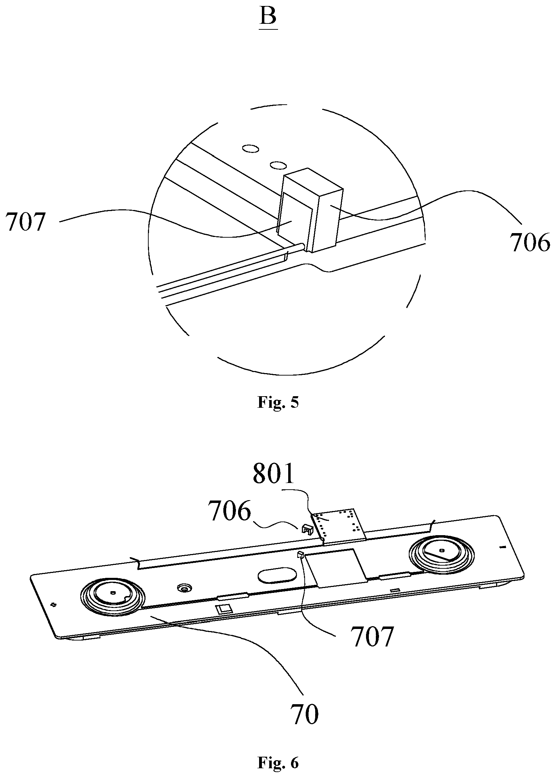

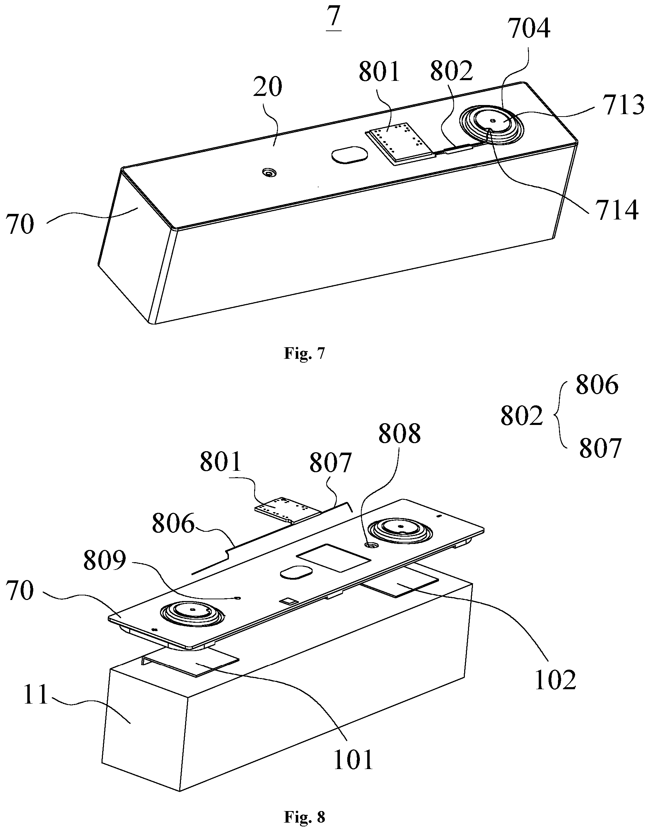

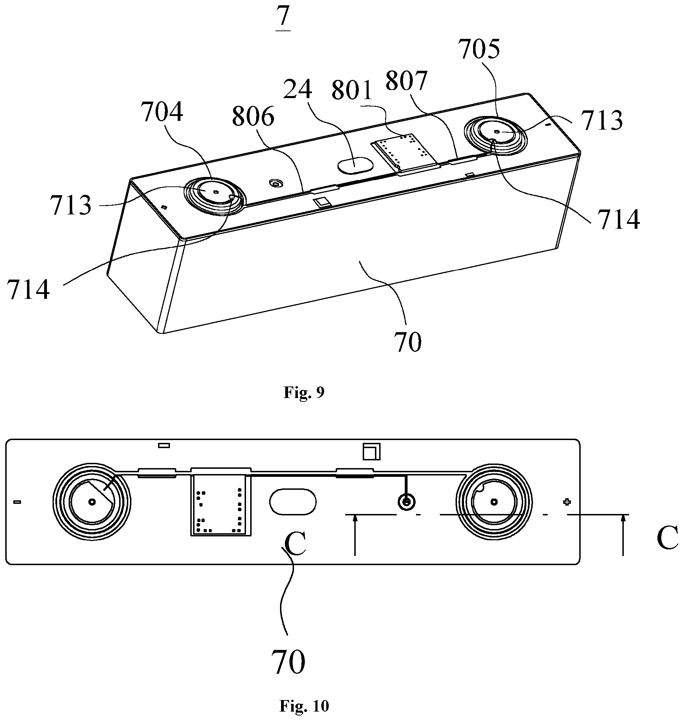

Continue to refer to Fig. 3 to Fig. 9, where Fig. 3 is an exploded schematic diagram of a battery cell in a battery provided by some embodiments of the present application; Fig. 4 is a schematic structural diagram of a first connecting assembly provided by some embodiments of the present application; Fig. 5 is an enlarged schematic diagram of a circular frame B in Fig. 4; Fig. 6 is a schematic structural diagram of a first connecting assembly provided by other embodiments of the present application; Fig. 7 is a schematic structural diagram of a battery cell provided by other embodiments of the present application; Fig. 8 is a schematic structural diagram of a battery cell provided by still other embodiments of the present application; and Fig. 9 is a schematic structural diagram of a battery cell provided by some further embodiments of the present application.

As shown in Fig. 3 and Fig. 4, the battery cell 7 in the embodiments of the present application includes a shell 70 and a first detection assembly 801. The first detection assembly 801 is disposed on the shell 70, and the first detection assembly 801 is configured to detect status information of the battery cell 7.

Specifically, the shell 70 may have various structures, and a shape of the shell 70 is usually square or circular. The shell 70 may be made of a metal material having certain strength and corrosion resistance, such as stainless steel or aluminum alloy.

The first detection assembly 801 is a component for detecting the status information of the battery cell 7 and may include an electronic chip or an electronic computing module, where the electronic chip can analyze and compute some sensor data in the battery cell 7 to obtain the status information of the battery cell 7.

When the voltage information, temperature information, or pressure information in the battery cell 7, obtained by the first detection assembly 801 is greater than or less than a preset value, monitoring data can be fed back, and an operator can adjust the battery cell 7 alone. For example, the corresponding battery cell 7 is repaired, replaced, or the like. Therefore, the above settings can adjust the status of the battery cell 7 in a timely manner, thereby avoiding replacing the entire battery 2, improving the efficiency of maintenance, and prolonging the service life of the entire battery 2.

In the technical solution of the embodiment of the present application, the first detection assembly 801 is disposed in the battery cell 7, which can obtain the operating status information of the battery cell 7, monitor the battery cell 7, and find abnormal conditions of the battery cell 7 during operation in a timely manner, thereby improving the operational stability of the battery cell 7 and the safety of the battery 2.

In some embodiments of the present application, the status information includes at least one of voltage information, temperature information, deformation information, and pressure information.

Specifically, the voltage information refers to an output voltage of the electrode assembly 11 in the battery cell 7. For example, a wire may be connected to two output ends of the electrode assembly 11, and a voltage difference between two ends of the wire may be computed to obtain the voltage information of the corresponding battery cell 7. For the temperature information, a thermally conductive adhesive transmits a change in the temperature of the battery cell 7 to a temperature sensor, and then the temperature sensor sends data to the first detection assembly 801 to obtain the temperature information of the battery cell 7. For the pressure information, a deformation sensor obtains a deformation quantity of the shell and then transmits the deformation quantity to the first detection assembly 801, and the first detection assembly 801 computes pressure, corresponding to the deformation, of the electrode assembly 10 inside the shell 70, to obtain the pressure information of the battery cell 7.

By monitoring the status information, the internal operating status of the battery cell 7 can be accurately reflected to ensure the accuracy of detection data.

In some embodiments of the present application, the first detection assembly 801 is connected to the shell 70 by any one of bonding, clamping, or welding. The above connection method can ensure a firm connection between the first detection assembly 801 and the shell 70 and ensure the safety and reliability of a status monitoring process.

In some embodiments of the present application, as shown in Figs. 4 to 6, the battery cell 7 further includes a first connecting assembly 701, and the first detection assembly 801 is connected to the shell 70 through the first connecting assembly 701.

In some embodiments of the present application, the first connecting assembly 701 is used for detachably connecting the first detection assembly 801 to the shell 70. The above structure can improve the replacement efficiency of the first detection assembly 801. For example, the first connecting assembly 701 may be a bolt, a clamping member, or a riveting member.

In some embodiments of the present application, the first connecting assembly 701 includes: a first connecting seat 706 and a first connecting block 707. The first connecting seat 706 has a first recess, and the first connecting seat 706 is connected to one of the shell 70 or the first detection assembly 801. The first connecting block 707 has a first protrusion detachably connected to the first recess, and the first connecting block 707 is connected to the other of the shell 70 or the first detection assembly 801. Due to the detachable connection between the first recess and the first protrusion, the structure is simple and easy to assemble. Therefore, the structure can effectively improve the assembly efficiency and replacement efficiency of the first detection assembly 801.

In some embodiments of the present application, the first detection assembly 801 includes a chip. The battery cell 7 further includes a second detection assembly disposed at a position for detecting of the battery cell 7. The second detection assembly and the first detection assembly 801 are configured to enable wireless communication.

For example, the second detection assembly may be a sensor for sensing various changing data of the battery cell 7. The chip has a data processing and computing function and can compute and convert data from various sensors. In addition, the chip further has functions of receiving and transmitting signals. The chip can transmit data to an external structure or a component such as the sampling assembly of the battery 2 to feed back the status information of the corresponding battery cell 7. The wireless communication refers to a data transmission method without physical wiring harnesses. For example, the wireless communication can be performed between the first detection assembly 801 and the second detection assembly through infrared signals or Bluetooth signals to transmit data.

The position for detecting may be a position inside the battery cell 7. The position for detecting is used for providing a mounting space to mount the second detection assembly, and meanwhile, the position for detecting can accurately reflect the status of the battery cell 7. For example, when the second detection assembly is a temperature sensor, the position for detecting may be on the electrode assembly 11; or when the second detection assembly is a deformation sensor, the position for detecting may be near the pressure relief mechanism 24.

The above structure can simplify wiring harnesses of the first detection assembly 801 and the second detection assembly, improve the integration of the device, reduce the space occupied by the second detection assembly, and ensure the energy density of the battery cell 7.

In some embodiments of the present application, the battery cell 7 includes an electrode assembly 11 and a second connecting assembly 802. The electrode assembly 11 is disposed in the shell 70, the chip is disposed on a side, away from the electrode assembly 11, of the shell 70, and the second connecting assembly 802 is configured to electrically connect the electrode assembly 11 to the chip.

In some embodiments of the present application, as shown in Fig. 7, the shell 70 further includes a first electrode terminal 704, the electrode assembly 11 has a positive electrode tab and a negative electrode tab, the shell 70 is electrically connected to one of the positive electrode tab or the negative electrode tab, the first electrode terminal 704 is electrically connected to the other of the positive electrode tab or the negative electrode tab, the chip is disposed in the shell 70 and electrically connected to the shell 70, and the second connecting assembly 802 is connected to the first electrode terminal 704.

The shell 70 is used as a leading-out end for the positive electrode tab or the negative electrode tab, and the first electrode terminal 704 is used as the other leading-out end, thereby simplifying the structure of the battery cell 7. Meanwhile, the second connecting assembly 802 and the chip are connected to the two leading-out ends respectively, which can achieve data transmission between the first connecting assembly 701 and the chip. The above structure is simple, and improves the integration of the device, while ensuring the efficiency of detection data transmission

In some embodiments of the present application, as shown in Fig. 8, the electrode assembly 11 has a positive electrode tab 101 and a negative electrode tab 102, the second connecting assembly 802 includes a first connecting wire 806 and a second connecting wire 807, the first connecting wire 806 is electrically connected to the positive electrode tab 101, and the second connecting wire 807 is electrically connected to the negative electrode tab 102.

Specifically, the first connecting wire 806 and the second connecting wire 807 may be connected to the electrode tabs of the battery cell 7 by welding, hot melt connection, or the like. The first connecting wire 806 and the second connecting wire 807 are directly connected to the positive electrode tab 101 and the negative electrode tab 102, which can improve the efficiency of obtaining status information by the second detection assembly and ensure the accuracy of detection data.

In some embodiments of the present application, with reference to Fig. 9, the shell 70 includes a first electrode terminal 704 electrically connected to the positive electrode tab 101, and the first connecting wire 806 is connected to the first electrode terminal 704. Optionally, the shell 70 further includes a second electrode terminal 705 electrically connected to the negative electrode tab 102, and the second connecting wire 807 is connected to the second electrode terminal 705. The first connecting wire 806 is connected to the first electrode terminal 704, which facilitates the connection operation of the first connecting wire 806 and improves the convenience of assembling the second detection assembly.

In some embodiments of the present application, an avoidance structure 714 is disposed on an end surface, away from the electrode assembly 11, of the first electrode terminal 704 or the second electrode terminal 705. Optionally, an avoidance structure 714 is disposed on an end surface, away from the electrode assembly 11, of each of the first electrode terminal 704 and the second electrode terminal 705. The avoidance structure 714 is used for accommodating an end portion of the second connecting assembly 802.

Specifically, the avoidance structure 714 may be formed by inward depression of a part of a surface of an end portion of the first electrode terminal 704 or the second electrode terminal 705. The end portion of the second connecting assembly 802 can be exposed by the avoidance structure 714. The protruding height of the second connecting assembly 802 on the surface of the electrode terminal is reduced, and the interference between the end portion of the second connecting assembly 802 and another component connected to the end portion of the electrode terminal is reduced.

In some embodiments of the present application, with reference to Fig. 8, the shell 70 is provided with a connecting hole 809, and the end portion of the second connecting assembly 802 passes through the connecting hole 809 and is connected to the electrode assembly 11.

The connecting hole 809 may be a through hole passing through in a thickness direction of a wall of the shell 70, and the connecting hole 809 should be close to the position for detecting of the battery cell 7, so as to reduce the wiring length of the second connecting assembly 802 as much as possible.

In some embodiments, the connecting hole 809 may be a liquid injection hole 808 on the shell 70. The second connecting assembly 802 directly passes through the injection hole 808 and is connected to the electrode assembly 11, which can reduce a quantity of perforations in the shell 70 and improve efficiency. The connecting hole 809 facilitates passing of the end portion of the second connecting assembly 802 through the shell 70 and connection to the electrode assembly 11 in the shell 70.

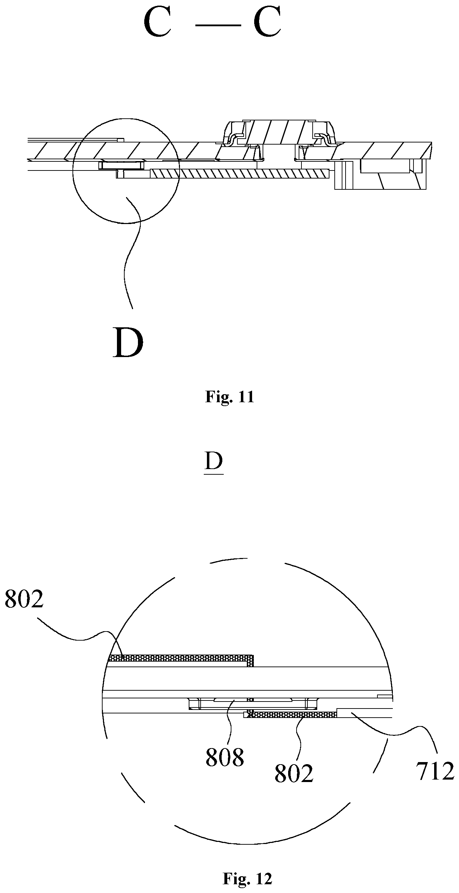

In some embodiments of the present application, with reference to Fig. 10 to Fig. 12, the battery cell 7 further includes a connecting sheet 712, and one end of the second connecting assembly 802 is connected to the connecting sheet 712. The second connecting assembly 802 may be a wire with an insulating layer, and an end portion of the wire is welded to the connecting sheet 712 to achieve connection.

The connecting sheet 712 may be a sheet-like conductor, one side of the connecting sheet 712 is used for being welded to the positive electrode tab 101 or the negative electrode tab 102 of the electrode assembly 11, and the other side of the connecting sheet 712 is used for being connected to the electrode terminal. The connecting sheet 712 can lead out the current of the electrode assembly 11 and fix the tab. Accurate monitoring data can be obtained by connecting the second connecting assembly 802 to the connecting sheet 712. Meanwhile, the welding position on the surface of the connecting sheet 712 can be effectively utilized to ensure the fixing of the welding position at the end portion of the first connecting assembly 701 and ensure the stability of connection.

In some embodiments of the present application, the second detection assembly includes a deformation sensor, the shell 70 includes a pressure relief mechanism 24, and the deformation sensor is disposed near or on the pressure relief mechanism 24. The deformation sensor is disposed on or near the pressure relief mechanism 24 to accurately obtain deformation data of the pressure relief mechanism 24, and the position can ensure the accuracy and sensitivity of the deformation data, improve detection efficiency, reflect an abnormal status of the battery cell 7 in a timely manner, and further ensure the safety of the battery cell 7.

In some embodiments of the present application, the second detection assembly includes a temperature sensor, and the temperature sensor is disposed on a side, facing the electrode assembly 11, of the shell 70, or the temperature sensor is disposed on the electrode assembly 11. The temperature sensor is used for obtaining temperature information of the electrode assembly 11, which can reflect the operating status of internal substances in the battery cell 7 in a timely manner. When the temperature of the battery cell 7 is too high, feedback can be provided in a timely manner and thus the probability of failure or explosion of the battery cell 7 is reduced.

In some embodiments of the present application, the shell 70 includes an end cover, and the first electrode terminal 704 and/or the second electrode terminal 705 are disposed on the end cover 30. The first electrode terminal 704 or the second electrode terminal 705 is disposed on the end cover 30 to facilitate the connection of the first electrode terminal 704 and the second electrode terminal 705 with external components or devices.

An embodiment of the present application further provides a battery 2, including the battery cell 7 in the foregoing embodiments.

In some embodiments of the present application, the battery 2 further includes a sampling assembly. The sampling assembly is connected to the first detection assemblies 801 of at least some battery cells 7 to obtain status information of the battery cells 7. By setting the sampling assembly, statistics on data from a plurality of battery cells 7 can be made to reflect the operating status of the entire battery 2, facilitate a user to monitor the overall status of the battery 2, and adjust or replace abnormal battery cells 7 in a timely manner, thereby ensuring the safe and stable operation of the entire battery 2 and prolonging the service life of the battery 2.

Embodiments of the present application further provide an electricity consuming apparatus including the battery 2 in the foregoing embodiments for providing electrical energy.

The technical solution described in the embodiment of the present application is applicable to the battery 2 and the electricity consuming apparatus using the battery 2. The electricity consuming apparatus may be a vehicle 1, a mobile phone, a portable device, a notebook computer, a ship, a spacecraft, an electric toy, an electric tool, or the like. The vehicle 1 may be an oil-fueled vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not impose special restrictions on the foregoing electricity consuming apparatus.

The battery 2 in the embodiments of the present application includes a battery cell 7, and a first detection assembly 801 is disposed in the battery cell 7. The first detection assembly 801 is disposed in the battery cell 7, which can obtain operating status information of the battery cell 7, monitor the battery cell 7, and find abnormal conditions of the battery cell 7 during operation in a timely manner, thereby improving the operational stability of the battery cell 7 and the safety of the battery 2 and prolonging the service life of the battery 2. Therefore, the battery cell 7, the battery 2, and the electricity consuming apparatus provided in the embodiments of the present application can also achieve the above technical effects due to the first detection assembly 801, which will not be elaborated here.

Although the present application is already described with reference to the preferred embodiments, various improvements can be made and components therein can be replaced with equivalents without departing from the scope of the present application. In particular, as long as there is no structural conflict, the various technical features mentioned in the embodiments can be combined in any way. The present application is not limited to the specific embodiments disclosed herein, but includes all technical solutions falling within the scope of the claims.

## Claims

1. A battery cell, comprising:
a shell; and
a first detection assembly disposed on the shell, wherein the first detection assembly is configured to detect status information of the battery cell.

2. The battery cell according to claim 1, wherein the status information comprises at least one of voltage information, temperature information, deformation information, and pressure information.

3. The battery cell according to claim 1 or 2, wherein the first detection assembly is connected to the shell by any one of bonding, clamping, or welding.

4. The battery cell according to claim 1 or 2, wherein the battery cell further comprises a first connecting assembly, and the first detection assembly is connected to the shell through the first connecting assembly.

5. The battery cell according to claim 4, wherein the first connecting assembly is configured to detachably connect the first detection assembly to the shell.

6. The battery cell according to claim 5, wherein the first connecting assembly comprises:
a first connecting seat having a first recess, wherein the first connecting seat is connected to one of the shell or the first detection assembly; and
a first connecting block having a first protrusion detachably connected to the first recess, wherein the first connecting block is connected to the other of the shell or the first detection assembly.

7. The battery cell according to any one of claims 1-6, wherein the first detection assembly comprises a chip, and
the battery cell further comprises a second detection assembly, the second detection assembly is disposed at a position for detecting of the battery cell, and the second detection assembly and the first detection assembly are configured to enable wireless communication.

8. The battery cell according to claim 7, wherein the battery cell comprises an electrode assembly and a second connecting assembly, the electrode assembly is disposed in the shell, the chip is disposed on a side of the shell away from the electrode assembly, and the second connecting assembly is configured to electrically connect the electrode assembly to the chip.

9. The battery cell according to claim 8, wherein the shell further comprises a first electrode terminal, the electrode assembly has a positive electrode tab and a negative electrode tab, the shell is electrically connected to one of the positive electrode tab or the negative electrode tab, the first electrode terminal is electrically connected to the other of the positive electrode tab or the negative electrode tab, the chip is disposed in the shell and electrically connected to the shell, and the second connecting assembly is connected to the first electrode terminal.

10. The battery cell according to claim 8, wherein the electrode assembly has a positive electrode tab and a negative electrode tab, the second connecting assembly comprises a first connecting wire and a second connecting wire, the first connecting wire is electrically connected to the positive electrode tab, and the second connecting wire is electrically connected to the negative electrode tab.

11. The battery cell according to claim 10, wherein the shell comprises a first electrode terminal electrically connected to the positive electrode tab, the first connecting wire is connected to the first electrode terminal, and/or the shell comprises a second electrode terminal electrically connected to the negative electrode tab, and the second connecting wire is connected to the second electrode terminal.

12. The battery cell according to claim 11, wherein an avoidance structure is disposed on an end surface of the first electrode terminal and/or the second electrode terminal away from the electrode assembly, and the avoidance structure is configured to accommodate an end portion of the second connecting assembly.

13. The battery cell according to any one of claims 8-12, wherein the shell is provided with a connecting hole, and the end portion of the second connecting assembly passes through the connecting hole and is connected to the electrode assembly.

14. The battery cell according to claim 13, wherein the battery cell further comprises a connecting sheet, and one end of the second connecting assembly is connected to the connecting sheet.

15. The battery cell according to any one of claims 7-14, wherein the second detection assembly comprises a deformation sensor, the shell comprises a pressure relief mechanism, and the deformation sensor is disposed near or on the pressure relief mechanism.

16. The battery cell according to any one of claims 8-14, wherein the second detection assembly comprises a temperature sensor, and the temperature sensor is disposed on a side of the shell facing the electrode assembly, or the temperature sensor is disposed on the electrode assembly.

17. The battery cell according to claim 9 or 11, wherein the shell comprises an end cover, and the first electrode terminal and/or the second electrode terminal are disposed on the end cover.

18. A battery, comprising the battery cell according to any one of claims 1-17.

19. The battery according to claim 18, further comprising a sampling assembly that is connected to the first detection assemblies of at least some battery cells to obtain the status information of the battery cells.

20. An electricity consuming apparatus, comprising the battery according to claim 18 or 19 for providing electrical energy.
